# EUROPEAN PATENT APPLICATION

(11) **EP 1 489 865 A1**
(43) Date of publication of application: **22.12.2004**
(21) Application number: 03076894.9
(22) Date of filing: 18.06.2003
(51) Int. Cl.: H04Q 7/34, H04L 12/56

(54) **Method and system for analysing data quality measurements in wireless data communication networks**

(71) Applicant: Koninklijke KPN N.V., 9726 AE Groningen (NL)
(72) Inventor: Beerends, John Gerard, 4585 PG Hengstdijk (NL); Jorguseski, Ljupco, 2282 TR Rijswijk (NL)
(74) Representative: Wuyts, Koenraad Maria

(57) **Abstract**

Measurement system and method for determining a quality indicator for end-to-end data transfer in a wireless data network (1). A data network analysis system (10) is connected to the wireless data network (1) for measuring at least one system performance indicator using a predefined data transfer specimen. The measurement system (10) is further equipped with processing means (2) which are arranged for deriving the quality indicator for at least one other data transfer type from the at least one performance indicator. The present system and method also allow to analyse the contributions to the quality indicator for determining underlying causes for bad performance.

## Description

### Field of the invention

The invention relates to data communication systems, and more particularly relates to a method and system for measuring end-to-end perceived data quality in wireless data communication systems.

### Background of the invention

With the introduction of wireless data networks it has become important to measure the end-to-end perceived quality for the different types of services that can be used over a (wireless) data network. It is already common practice to measure the lower layer data quality of a network, for example on the physical, transport or network layers. But for the broad acceptance of wireless data networks, and for the resulting commercial success, it is necessary to assess how the user of these wireless services will perceive the quality of the service. To be able to assess the perceived quality based on lower layer measurements it is necessary to determine which lower layer measurements best correlate with the perceived quality.

The present invention relates to field measurements because these measurements provide the best correlation with user perception. The present invention particularly focuses on the end-to-end perceived quality for a service that will be broadly used on wireless data networks: downloading files using FTP (File Transfer Protocol). However, it will be clear to the person skilled in the art that end-to-end quality determination in other types of data transfer (browsing, audio/video data streaming, chatting) also may benefit from the present invention.

Tools for performing field measurements on the lower layer data quality in wireless communication networks are known, see for example US2002/0155816, which discloses systems and methods for measuring data quality in a wireless communication network. One such system comprises a means for obtaining information related to a location of the mobile wireless device within the wireless data network, a means for establishing a data call between the mobile wireless device and the wireless data network via an electromagnetic signal, a means for obtaining information related to the quality of data service associated with the data call, and a means for correlating the information related to the quality of data service with the information related to the location of the mobile wireless device.

A drawback of these existing data quality measurements systems is that it is not known how the lower layer measurements correlate to the perception of the user of the wireless data services.

### Problem definition and aim of the invention

A major drawback of existing systems for measuring data quality in wireless communication networks is that it is not clear how the lower layer indicator measurements, like amount of resources allocated, relate to the perception of the performance of the wireless data service by the user. An example of these indicators for GPRS networks is number of used timeslots, bit/frame error rates, carrier/interference ratio C/I and coding scheme usage, cell reselections, etc.

The aim of the present invention is to provide a method and system to assess the end-to-end perceived quality by the user.

It is another aim of the present invention to provide a system for identifying underlying causes for bad performance.

### Summary of the Invention

According to the present invention, a method is provided for determining a quality indicator for end-to-end data transfer in a data network, e.g. the download and/or response time or network throughput in a GPRS network, comprising measuring at least one system performance indicator using a predefined data transfer type specimen, and deriving the quality indicator for at least one other data transfer type from the at least one performance indicator.

The at least one system performance indicator may be a measured parameter which is indirectly or directly linked to the quality indicator to be estimated.

The at least one system performance indicator may in a first embodiment comprise an indirect quality indicator, i.e. an indicator which may be measured, but is not directly related to a perceived quality. The system performance indicator may e.g. be at least one low level data network performance parameter as normally measured for assessing network performance. The method further comprises mapping the at least one low level data network performance parameter to the quality indicator. The quality indicator may be an estimated session time for the at least one other data transfer type (or directly related thereto, the throughput speed for the at least one other data transfer type).

The low level data network performance parameters may e.g. be the percentage of time in which a specific coding scheme is used in the downlink, or the number of used timeslots during the download. In the case of FTP downloads, these performance parameters show a high correlation with actual session times, and can thus be used to derive estimated session times from data gathered from a single large file FTP download. For browsing, it has been found that the measured C/I value (Carrier/Interference ratio) may advantageously be used as low level performance parameter, e.g. in combination with the Number of used time slot parameter.

The mapping of the measured parameters using the low level performance parameters may be a linear mapping (using a single parameter) or a multidimensional mapping, e.g. using two parameters (two-dimensional mapping). For FTP downloads, correlations between actual session times and estimated session times have been found, with the combination of the two previously mentioned low level parameters providing the best result. For browsing, good results have been achieved using the parameters number of used time slots and averaged measured C/I value.

In a further embodiment, the measured low level performance parameters are modified to model more accurately the estimation of the session time. Integer values of the at least one low level data network performance parameter may e.g. be mapped to real values. For example, for FTP downloads, the number of used timeslots (an integer value) may be mapped to real values (integer value 1 is mapped as real value x1; integer value 2 is mapped as real value x2), and the percentage of time that a parameter has values in a predefined range may be clipped (e.g. at 5%). For browsing, good results have been achieved when the number of used time slots are mapped differently, i.e. different values for x1 and x2.

In a further group of embodiments, which may advantageously be used for determining estimated session times as quality indicators for FTP downloads, the at least one system performance indicator is a direct quality indicator. In this case, the at least one system performance indicator is the measured throughput speed of a download of the predefined data transfer type specimen (e.g. a 512 kByte file), and the quality indicator is derived from the measured throughput speed using a moving window averaging estimation, in which the size of the moving window corresponds to the at least one other data transfer type. The at least one other data transfer type may e.g. be an FTP download of a smaller size file.

A final quality indicator is calculated in a further embodiment from the percentage increase in the quality indicator (such as the estimated session time) for the at least one other data transfer type. This allows to obtain a final quality figure, e.g. on a scale from 1-5, which allows easier interpretation and comparison.

Underlying causes in the system may be determined from further analysis of the contribution of each low level performance parameter to the estimated session time. To allow for analyzing the underlying causes for bad performance, direct and/or statistical back mapping of the at least one system performance indicator may be used. In this manner, it is e.g. possible to determine whether voice congestion or cell reselection is the major source of bad performance, by looking at the contributions of various low level data network performance parameters to the derived quality indicator.

The predefined data transfer type specimen as used for measuring the at least one system performance indicator (indirect or direct) in all of the above described embodiments may e.g. be a FTP download of a large size file (e.g. 512 kByte). The quality indicator for data transfer types may then be derived from this at least one system performance indicator. Other data transfer types may be FTP downloads of different size of files (e.g. 4, 32 and 128 kByte), a browsing session, audio streaming data, video streaming data, chat sessions, etc..

The present method allows to derive a number of quality indicators for different types of data transfers using only a single field measurement (the large file size download). The quality indicator is e.g. a session time, such as the sum of the response time and download time in an FTP session.

In a further aspect, the present invention relates to a measurement system for determining a quality indicator for end-to-end data transfer in a wireless data network, comprising a data network analysis system connected to the wireless data transfer network for measuring at least one system performance indicator using a predefined data transfer type specimen, in which the measurement system is further equipped with processing means which are arranged for deriving the quality indicator for at least one other data transfer type from the at least one performance indicator. Furthermore, the processing means may be arranged to execute the method according to one of the present methods. This measurement system provides advantages analogue to the advantages described above in relation to the present method.

In an even further aspect, the present invention relates to a computer program comprising computer readable software instructions, which when loaded on a computer system, provides the computer system with the functionality of the method according to one of the present methods. Also, the present invention relates to a computer program product, such as a floppy disc or CDROM, comprising a computer program according to the present invention.

### Brief Description of the Drawings

The present invention will now be explained in further detail using a number of exemplary embodiments, with reference to the accompanying drawings.
Figure 1 shows a system diagram of an embodiment of the present invention;
Figure 2 shows a flow diagram of a general embodiment of the method according to the present invention;
Figure 3 shows a plot of the measured download time and the estimated download time using low level performance parameters;
Figure 4 shows a plot of measured application throughput speed in adverse circumstances using an averaging window size of 4 sec., and the estimated session time for 4 kByte FTP downloads using modified low level performance parameters.

### Detailed Description of the Invention

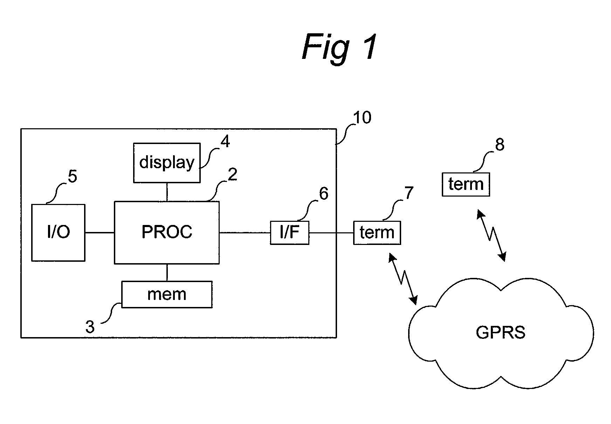

In figure 1, a schematic diagram is shown of a measurement system 10, in which the present invention may be embodied. The data network as used in the following exemplary embodiments of the present invention is a GPRS network 1 (General Packet Radio Service), to which many users may be connected using wireless terminals 8 (only one shown in figure 1). Also, the GPRS network 1 may be connected to further data or voice networks, to which further systems (e.g. an FTP server or a web site host server) may be connected to allow a user mobile access. The GPRS network 1 is optimised for data transfer. Although the present invention is explained using a GPRS network 1, the person skilled in the art will understand the invention may also be applied in other types of data transfer networks.

The measurement system 10 may be connected to the GPRS-network 1 using a proper wireless terminal 7 and a dedicated interface 6. The measurement system 10 comprises a processing system 2 (which may comprise one or more processors or other processing means), connected to input/output elements 5 (such as a keyboard, mouse, trackball, etc.), a display 4 (such as a monitor or LCD display), and memory 3, e.g. in the form of a hard disk, semiconductor memory (ROM, RAM, etc.) or removable memory means (floppy disc, CDROM, etc.). The processor 2 is arranged to execute a software program (e.g. stored in one of the memories 3) which comprises program code which allows the processor 2 to execute the present method.

The basic start point of the end-to-end GPRS quality measurements (which may provide a quality indicator) is the quality as perceived by the user. For data services (FTP file downloads, browsing sessions, streaming audio/video data, chat sessions, etc.) the determining factors are:
- The response time, the time it takes to receive the first response
- The download time, the time it takes to send/receive the data
- The variation in response time
- The variation in download time
- The way the data is presented to the user
- The data integrity, meaning that the data is transported without errors

For normal data services the TCP layer guarantees the integrity.

It has been found that the combined effect of response and download time is the most significant factor that determines the end-to-end perceived quality.

With FTP there is in general no distinction made between download time and response time and FTP download time (or session time) is in this report used to indicate the time between start and stop of the FTP session. With browsing there is in general a distinction made between download time and response time and in this report the sum of the two is referred to as browsing time (or session time).

The main causes for low performance within the GPRS network 1 are:
- Congestion, too many active users
- Bad radio conditions, low C/I (carrier/interference ratio) sometimes leading to cell reselections
- Cell reselections
- Server/Core network performance

The congestion influence is pre-dominantly seen in the time dependent behaviour of the quality. Congestion comes in two different flavours, voice congestion and data congestion. Voice congestion can be detected by looking at the number of used time slots. Data congestion is more difficult to detect.

The influence of bad radio conditions and cell reselections is pre-dominantly seen in the location dependent behaviour of the quality. Bad radio conditions can be detected from C/I measurements, bit/frame error rates and coding scheme usage. Cell reselections can be detected by looking at the number of used time slots, which drops to zero when a cell reselection occurs. With voice congestion this drop in number of used time slots rarely goes to zero.

Server/Core network performance is mostly out of the control of a service provider and will especially dominate performance for high speed links. For low speed links, server performance should generally not be the limiting factor but it is clear that in assessing GPRS quality over the Internet the server and the public domain part of the connection that is used may have a significant influence. Therefore measurements that use public domain servers are not suited for field measurements. Two different approaches are possible to solve the problem:
- Using a reference connection with a reference server both outside the public domain
- Comparing the GPRS performance with a standard fixed line performance and then estimate the influence of the public domain part of the connection

Two different approaches were taken in the data analysis. In the first approach the throughput speed at the application layer for a 512 kByte file download is averaged over three different time scales that approximately coincide with the download of the file sizes of 4, 32 and 128 kByte. From this averaged throughput direct predictions can be made for the download times of the 4, 32 and 128 kByte files from the 512 kByte file. This allows a direct quality analysis for FTP downloads for all four different file sizes (4, 32, 128 and 512 kByte), but does not allow to find the underlying causes for bad performance.

In the second approach relevant lower layer indicators (e.g. at the physical, network, transport layer) are measured during an FTP download for each of the four different files sizes. From possible indicators the combination that gives the best mapping from indicators to session (download) time is searched for. The mapping of these indicators should have a direct interpretation as to what the underlying reason is for the low GPRS performance (i.e. long download times). Preferably the indicators that are found are the same for all four different downloads, but only the mappings from indicators to download time is different. This second approach can also be applied for browsing quality assessments.

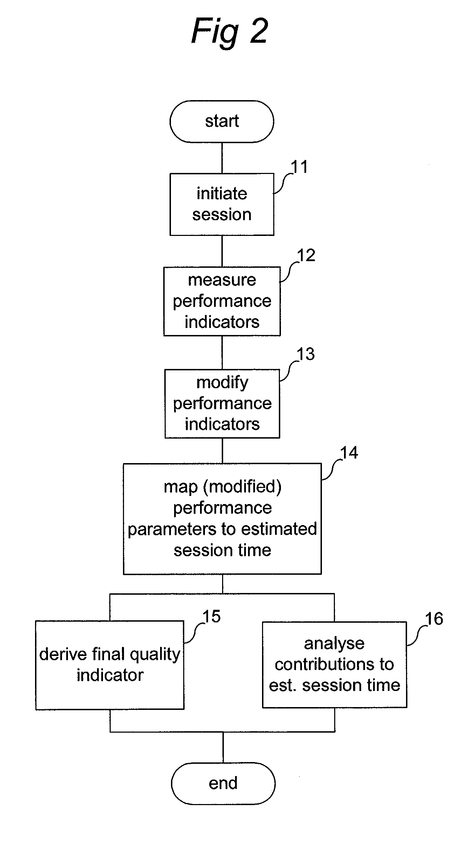

In general, figure 2 shows a flow chart of an embodiment of the present method. The measurement is started by initiating a large file size (e.g. 512 kByte) download (block 11). During the download, performance indicators (such as throughput speed, number of used time slots, percentage of time in which a specific coding scheme is used, measured C/I value,...) are measured in block 12, and when needed, one or more of these performance parameters are modified (see below) in block 13. In the next step (block 14), the (modified) performance parameters are mapped to an estimated session time using a predefined mapping function (see also the explanation below). The estimated session time may be used directly as and end-to-end perceived quality indicator, or a further quality indicator (e.g. using a scale of one to five) may be derived (block 15). Also, it is possible to analyse the various contributions of each of the performance parameters to the quality indicator (block 16) to determine the underlying causes of a bad performance.

In the following, separate descriptions will be given for the exemplary determination of quality indicators for FTP file downloads and browsing using a GPRS network 1.

### FTP download quality indicator

To keep the amount of final data manageable the following file sizes can be used for FTP download testing:
- 4 kByte, with download times between 4 and about 10 seconds
- 32 kByte, with download times between 12 and about 30 seconds
- 128 kByte, with download times between 40 and about 100 seconds
- 512 kByte, with download times between 140 and about 300 seconds

The largest file download does not need any post processing since quality is measured directly from the download time of this 512 kByte file. For statistical reliability one can follow the recommendation to use the variation over 10 downloads to estimate fluctuations in quality.

Using the first assessment approach the three small file quality measurements can be derived from the large file 512 kByte download by measuring the average application throughput with a running moving window with the three different time windows (4, 12 and 40 s) for the three different file sizes (4, 32 and 128 kByte). In ideal circumstances, the download time for a 128 kByte file is about 40 seconds, corresponding to a throughput of 3.2 kByte/s. This is valid for a terminal which uses three timeslots in a downlink. Tests have shown that the predicted session time is correct for these ideal circumstances..

Under bad circumstances, the throughput speed will vary. Tests have shown that in this case, the method provides a sufficiently accurate estimated session time.

For the smaller size files, comparative results have been obtained using the window averaging method.

This leads to the conclusion that application throughput as measured using a large file (512 kByte) download can be used for assessing the download quality from the point of the user for file sizes of 32 kByte and larger. For these file sizes the throughput variations on the application level caused by the TCP layer are acceptable. For file sizes below 32 kByte one should be aware that fluctuations up to 70% can be caused by the current TCP/IP stack behaviour.

Although this direct approach allows to quantify the quality it does not allow to find the underlying causes for bad performance. Therefore the next step is to analyse the data with the second assessment approach.

As explained above the second assessment approach analyses the download results for 4, 32,128 and 512 kByte files over a wide range of network conditions and tries to find lower layer indicators that best correlate with the download time. For each of the four file sizes mappings are searched for, preferably using the same combination of lower layer indicators for all four file sizes but with a different mapping. These lower layer indicators are less influenced by the transport/application layer behaviour for large file downloads and will thus also allow correct quality predictions on the 4kByte time scale. Furthermore the mapping should allow to analyse the underlying cause for bad performance. In a first analysis lower layer indicators were correlated with a single linear mapping between download time and indicator, for all four different files sizes (4, 32, 128 and 512 kByte). The best indicators were:
- The percentage of time that a specific coding scheme is used in the downlink,
- The number of used time slots in the downlink.

When searching for the best two-dimensional mapping the afore mentioned indicator set gave the best correlation of all possible pairs.

A first detailed analysis showed that data congestion and voice congestion are the main effects that need to be modelled accurately in order to get higher correlations.

The indicator number of used timeslots is influenced by both cell-reselections and voice congestion. With cell-reselections the number of used timeslots is zero during the reselection process while for voice congestion it is decreased, e.g. from 3 down to 1. It turned out that the impact of a lower average number of used timeslots was far less in the case of voice congestion than in the case of cell reselections.

An effective way of modelling can be carried out in mapping the use of 1 and 2 time slots, as occurs with voice congestion, to the real values x1 and x2 respectively (i.e. all occurrences of 1 time slot are substituted by x1 and 2 by x2, effectively decreasing the impact of the use of 1 and 2 timeslots). This modified indicator (modified low level performance indicator) is denoted by MOD(UsedTimeslotsDL).

A second detailed analysis showed that the indicator for percentage of time a specific coding scheme is used, had little influence in the range between 0 and 5%. This is most probably caused by the fact that signalling information is always coded with the specific coding scheme so that the coding scheme usage below a certain percentage gives no information about the quality of the channel. This can be taken into account by mapping all values between 0 and 5 % to 5% (clipping). This modified indicator is denoted by MOD(CodingSchemeDL).

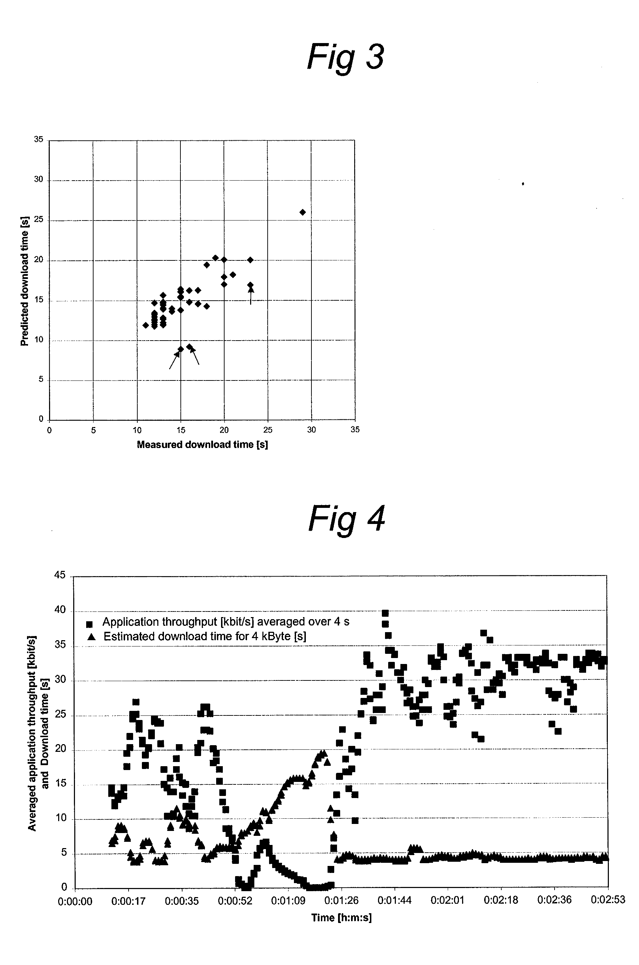

The final two-dimensional mapping that is used in the mapping tool gives an better correlation between model prediction and measured download time over all download times using the same indicator set for all four file sizes (4, 32, 128, 512 kByte). This correlation is up to a level that can be used in a tool, especially when it is combined with the analysis of the first assessment approach (see below). An example of the relation between measured and predicted download time is given in Figure 3 for the 32kByte case for which the fastest download time is 12 seconds. Few points, indicated with arrows in Figure 3, show a significant deviation from the regression line that can be derived from these measurement points. This is caused by a limitation of the used measurement equipment that could not correctly measure the utilisation of the used time slots in downlink.

Based on the two assessment approaches an FTP download quality assessment tool is implemented as a post processing on the analysis tool output that uses the following strategy:
- The input to the tool is the raw output from a 512 kByte download using the analysis tool application.
- For the file sizes of 32 kByte and 128 kByte the application throughput is averaged over the correct time scale (12 and 40 seconds respectively) and used as direct quality indicator (first assessment approach).
- The lower layer indicator percentage of time a specific coding scheme is used in %, is clipped. All values between 0 % and 5 are mapped to 5% to cope with the problem of performance saturation that occurs when the use of the specific coding scheme is below 5%.
- The lower layer indicator values number of used timeslots are modified in such a way that the difference in impact between a lower average number of used timeslots due to voice congestion and a lower average number of used timeslots due to cell reselections, is modelled correctly. This is carried out by mapping the use of 1 and 2 time slots, as occurs with voice congestion, to the real values x1 and x2 respectively. Note that this mapping gives a larger weight on time intervals for which no slots are available at all (due to cell reselections).

From the above mentioned modified lower layer indicators the download time for each of the three file sizes (4, 32 and 128 kByte) is predicted by (second assessment approach) using the following mappings:
o a1 - b1*MOD(UsedTimeslotsDL) + c1*MOD(CodingSchemeDL)
o a2 - b2*MOD(UsedTimeslotsDL) + c2*MOD(CodingSchemeDL)
o a3 - b3*MOD(UsedTimeslotsDL) + c3*MOD(CodingSchemeDL)
for 4, 32 and 128kByte files respectively, in which a1, a2, a3, b1, b2, b3, c1, c2, c3 are predetermined mapping coefficients.

The tool allows to further analyse the underlying cause of bad performance by:
- Checking the prediction difference between the download time derived from the application throughput (first assessment approach) with the download time derived from the lower layer mapping (second assessment approach). A large difference indicates a limitation in the measurement equipment that could not correctly measure the utilisation of the used time slots in downlink (see arrows in Fig. 3).
- Analysing if the main contribution comes from either the MOD(CodingSchemeDL), indicating poor radio performance, or from MOD(UsedTimeslotsDL), indicating voice congestion or cell reselection.
- Analysing the distribution of the number of used timeslots indicator. When many zero's are present cell reselection dominates the quality, when the values 1 and 2 dominate the distribution, voice congestion dominates the quality.

Figure 4 shows an example of the estimated download time of a 4 kByte file from the download of a large 512 kByte file under bad circumstances using the lower layer prediction.

### Other applications

The present invention can also be applied for other data transfer types than the FTP file download as discussed in the example above. Further possible applications in which end-to-end perceived quality can be determined using the present invention include, but are not limited to, browsing, streaming audio, streaming video, chatting etc. For each of the different types of applications, other (combinations of) performance indicators (direct performance indicator(s) such as throughput speed, or indirect performance indicator(s) such as number of used cells, etc (see above)) may be used.

### Perception based assessment procedure

This section deals with the problem of how to interpret the time variant behaviour for each of the three file sizes (4, 32, 128 kByte, coinciding with the time scales of 4, 12 and 40 seconds). For the largest file (512 kByte) quality is measured directly from the download time of the file and time variant behaviour has to be assessed on the basis of multiple downloads (e.g. 10 downloads as recommended).

The basic idea in the data interpretation is that the download time has to vary over more than 25% in order to have a perceptual effect and has to vary by a factor of two for perceiving a significant degradation. The idea of quality categorization can be used for both FTP download and browsing. This leads to the following quality classes using the ITU-T 5 point rating scale.
- **% increase in download / browsing time < 25: Excellent quality**
- **25 ≤ % increase in download / browsing time < 50: Good quality**
- **50 ≤ % increase in download / browsing time < 100: Fair quality**
- **100 ≤ % increase in download / browsing time < 200: Poor quality**
- **% increase in download / browsing time** ≥ **200: Bad quality**

Using this categorization one can quantify the time variant behaviour of the network, over the duration of the 512 kByte download, for each of the three file sizes for FTP download and for the browsing session. If a complete quality analysis is required one should thus calculate the percentages in each class (i.e. % excellent, % good, etc.) and use those five numbers to quantify the end-to-end quality for each of the four file sizes and the browsing session separately. For quantifying the time variant behaviour on the largest time scale (>140 s) one has to perform multiple FTP downloads of the 512 kByte file.

A first global quality analysis in the final post processing tool is carried out by calculating the percentage poor or bad as is commonly used in speech transmission quality assessment. This percentage is calculated from the lower layer indicators as well as from the application throughput (see above). This allows for an easy to interpret small set of quality numbers. For each of the three FTP download time scales and the single browsing time scale, two quality numbers in the form of a percentage poor or bad, are thus given. When they are about the same the degradation is not caused by data congestion, when they are significantly different data congestions plays an important role.

By a further analysis of the lower layer indicators one can find the cause for bad performance. When the average MOD(CodingSchemeDL) is high and C/I is low, then bad radio performance dominates the quality. When the average MOD(UsedTimeslotsDL) is low then voice congestion or cell reselection dominates the quality. By checking the distribution of the indicator number of used timeslots one can distinguish voice congestion from cell reselections. When many zero's are present cell reselection dominates the quality, when the values 1 and 2 dominate the distribution, voice congestion dominates the quality.

For the person skilled in the art, it will be clear that the above exemplary embodiments are only described for a better understanding. The exemplary embodiments are not meant to limit the scope of this application, which is defined by the appended claims.

## Claims

1. Method for determining a quality indicator for end-to-end data transfer in a wireless data network (1), comprising
measuring at least one system performance indicator using a predefined data transfer type specimen, and
deriving the quality indicator for at least one other data transfer type from the at least one performance indicator.

2. Method according to claim 1, in which the at least one system performance indicator comprises at least one low level data network performance parameter, and the method further comprises mapping the at least one low level data network performance parameter to the quality indicator.

3. Method according to claim 2, in which the mapping is a linear mapping, e.g. a linear two-dimensional mapping.

4. Method according to claim 2 or 3, in which the at least one low level data network performance parameter is a modified low level data network performance parameter.

5. Method according to claim 4, in which integer values of the at least one low level data network performance parameter are mapped to real values.

6. Method according to one of the claims 1 through 5, in which the at least one system performance indicator is the throughput speed, and the quality indicator is derived from the measured throughput speed using a moving window averaging estimation, in which the size of the moving window corresponds to the at least one other data transfer type.

7. Method according to one of the claims 2 through 6, in which a final indicator for the at least one other data transfer type.

8. Method according to one of the claims 2 through 7, in which the method further comprises the step of analysing the contribution of each of the at least one low level data network performance parameter.

9. Method according to one of the claims 1 through 8, in which the predefined data transfer type specimen is a FTP download of a large size data file, e.g. 512 kByte.

10. Measurement system for determining a quality indicator for end-to-end data transfer in a wireless data network (1), comprising
a data network analysis system (10) connected to the wireless data network (1) for measuring at least one system performance indicator using a predefined data transfer specimen,
in which the measurement system (10) is further equipped with processing means (2) which are arranged for deriving the quality indicator for at least one other data transfer type from the at least one performance indicator.

11. Measurement system according to claim 10, in which the processing means (2) are arranged to execute the method according to one of the claims 2 through 9.

12. Computer program comprising computer readable software instructions, which when loaded on a computer system, provides the computer system with the functionality of the method according to one of the claims 1 through 9.

13. Computer program product comprising a computer program according to claim 12.
